# EUROPEAN PATENT SPECIFICATION

(11) **EP 0 425 180 B1**
(45) Date of publication and mention of the grant of the patent: **19.03.1997**
(21) Application number: 90311375.1
(22) Date of filing: 17.10.1990
(51) Int. Cl.: G06T 1/60

(54) **Structure storage management in a graphics display system**
Strukturspeicherverwaltung in einem graphischen Anzeigesystem
Gestion d'enregistrement de structure dans un système d'affichage graphique

(30) Priority: 24.10.1989 US 426618
(43) Date of publication of application: 02.05.1991
(73) Proprietor: INTERNATIONAL BUSINESS MACHINES CORPORATION, Armonk, NY 10504 (US)
(72) Inventor: Liang, Nina Yen, West Hurley, New York 12491 (US)
(74) Representative: Burt, Roger James, Dr.

(56) References cited:
- COMPUTERS AND GRAPHICS. vol. 12, no. 2, 1988, OXFORD GB pages 201 - 211; HOWARD T.: 'A SHAREABLE CENTRALISED DATABASE FOR KRT: A HIERARCHICAL GRAPHICS SYSTEM BASED ON PHIGS'
- COMPUTERS AND GRAPHICS. vol. 12, no. 2, 1988, OXFORD GB pages 155 - 162; ABI- EZZI S. ET AL.: 'A SPECIAL GRAPHICS SYSTEM FOR PHIGS'

## Description

This invention relates to a method for storing hierarchical graphics data structures in a memory of a graphics display system and to a graphics display system comprising logic for performing said method.

Graphics display systems used in the area of computer aided design (CAD), and computer aided engineering (CAE) display images created based upon graphics orders entered into the system. The graphics orders define objects in terms of attributes such as color and primitive drawing operations for, e.g. a line, point, or polygon. Complex graphical images can be represented or modelled as a combination of graphical primitives. Modern graphics display systems implement an hierarchical graphics data model to allow a single low level object definition or sequence of definitions to be repetitively used to express a more complex object. Thus, for example, a primitive definition of a single wheel may be entered into the graphics display system and then used repetitively to define the wheels of an automobile on a computer aided design application.

Emerging standards for graphics system programming, such as the Programmer's Hierarchical Interactive Graphics System (PHIGS), provides a set of functions for the definition, display, and manipulation of graphical data and geometrically related objects. An interface standard such as PHIGS allows a particular graphics application program to be written at a high level without concern for the detailed implementation in a particular graphics display system. The use of this higher level language allows application programs to be transferred between various types of equipment with only minor modification.

Systems for handling operator interaction must be able to rapidly access operator referenced data and to quickly and efficiently implement the modifications requested by the operator. As the capacity of graphics display systems has increased and the models have become increasingly large, prior art methods of data location and update have become ineffective. Current methods for accessing structure storage information have become too slow to support the real time operator interaction demanded by system users.

An hierarchical graphics system based on PHIGS is described in Computers & Graphics, vol.12, No.2, 1988, Oxford GB, pages 201-211, T.Howard: "A Shareable Centralised Database for KRT3: a Hierarchical Graphics System Based on PHIGS". This paper describes a project focusing on the design and implementation of a shareable centralised database for hierarchical graphical data, and describes the structure references of PHIGS which enable elements of data structures, which elements are identified by their sequential number, to invoke other structures.

In accordance with the present invention, there is provided a computer graphics system having logic for generating images for display from hierarchical graphics data structures representing graphics primitives, each of said graphics data structures optionally referencing another data structure so as to invoke the execution of said data structure, wherein the logic is operable to store at a first memory location having a first address, for each of said data structures, a structure descriptor comprising data describing said data structure, characterised in that the logic is operable: for each instance of the invocation of one of said data structures by another of said data structures, to create an execute structure block having address pointers to the structure descriptor for the invoking data structure and to the structure descriptor for the invoked data structure, such that each execute structure block is associated with an invoking structure and an invoked structure; for each invoking structure, to link by address pointers the execute structure blocks associated with said invoking structure to form an execute structure list; and for each invoked structure, to link by address pointers the execute structure blocks associated with said invoked structure to form a reference structure list.

In accordance with a second aspect of the present invention, there is provided, in a computer graphics system in which graphics data structures representing graphics primitives are used for generating images for display, each of said data structures optionally referencing another data structure so as to invoke the execution of said data structure, a method of storing graphics data structures in an hierarchical linked relationship in a memory of said system to facilitate access thereto, wherein the method includes the step of, for each of said data structures, storing at a first memory location having a first address a structure descriptor comprising data describing said data structure, characterised in that the method includes the steps of: for each instance of the invocation of one of said data structures by another of said data structures, creating an execute structure block having address pointers to the structure descriptor for the invoking data structure and to the structure descriptor for the invoked data structure, such that each execute structure block is associated with an invoking structure and an invoked structure; for each invoking structure, linking by address pointers the execute structure blocks associated with said invoking structure to form an execute structure list; and for each invoked structure, linking by address pointers the execute structure blocks associated with said invoked structure to form a reference structure list.

The invention enables increased efficiency of operator interaction with a structure store to be achieved.

The invention provides a structure storage organisation that allows rapid access to referenced data structures.

Moreover, it provides for structure storage management that can allow editing and update of the structure storage without corrupting the hierarchical organisation.

A particular embodiment of the invention will be described hereinafter with reference to the accompanying drawings, in which:
Fig. 1 is a block diagram showing the data flow in a display system employing the present invention.
Fig. 2 is a block diagram illustrating a graphics display system incorporating the present invention.
Fig. 3 is a block diagram showing the hierarchical relationship between graphic data elements.
Fig. 4 is a diagram illustrating the hierarchical relationship between structures;
Fig. 5 is a block diagram illustrating the identification of the structure element;
Fig. 6 is a diagram illustrating the content of an edit block;
Fig. 7 is a diagram illustrating the relationship between a hashing table and structure descriptors;
Fig. 8a is a diagram illustrating the relationships between structures in an example view;
Fig. 8b is a memory diagram illustrating the interrelationships between memory structures according to the present invention;
Fig. 9 is a memory diagram illustrating the relationship between local and global shared memory according to the present invention; and
Figs. 10a and 10b are diagrams showing the relationships between structures.

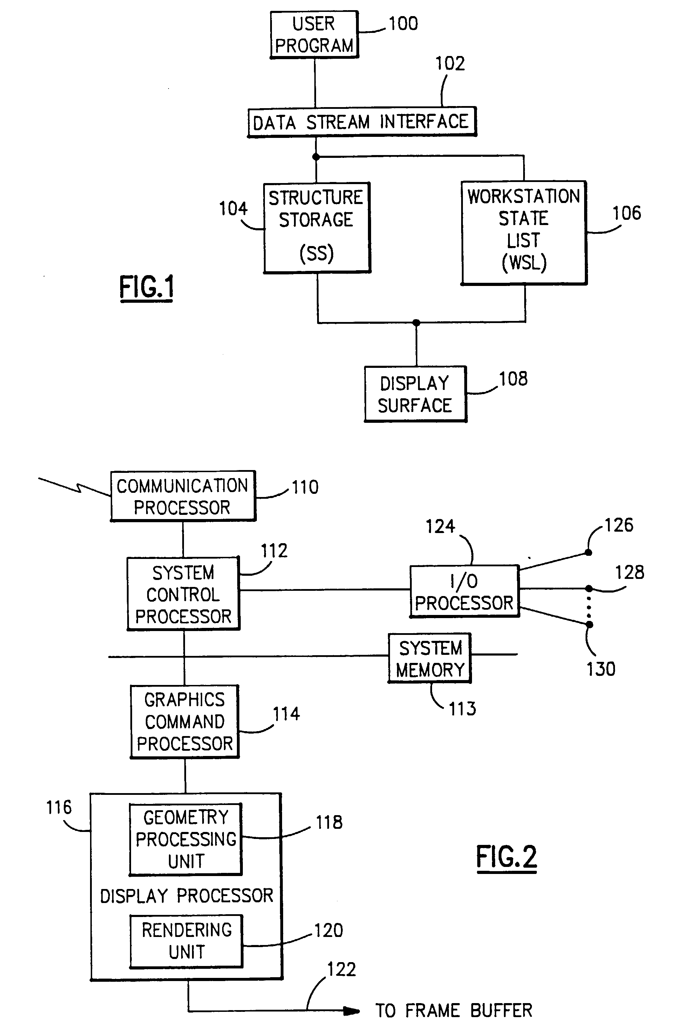

The logical data flow of a system employing a hierarchical data structure is presented in Fig. 1. User application program 100 passes a data stream 102 containing the graphics interface commands to a graphics processing system. The data stream information is divided into two categories: structure storage 104 and workstation state list 106. Structure storage 104 contains the detailed descriptions of the graphics elements to be displayed while workstation state list 106 contains information necessary to establish the workstation environment. A workstation program operating on the structure storage and workstation state list produces the final image to be generated on the display surface 108.

An example of a hardware architecture used to implement this form of graphics display system is shown in Fig. 2. Communications processor 110 provides an interface to a host system containing graphics orders and, potentially, the user applications program in graphical database. System control processor 112 manages the geometric database and controls the overall operations of the graphics display system. The system control processor will be discussed in greater detail below. Graphics command processor 114 interprets the graphics commands placed in the system memory 113 by system control processor 112 and generates the detailed commands required by display processor 116 containing the associated geometric processing unit 118 and rendering unit 120. The final outputs of the display processor are pixel definition signals sent on line 122 to the frame buffer for display on a display device.

The operation of the multiprocessor system described above is presented in greater detail in "A Multiprocessor Graphics Display System for Displaying Hierarchical Data Structures", a patent application bearing attorney docket number KI9-89-018 (US application number 425,891 filed 23 October 1989), filed concurrently with the present application and published as EP-A-0 425 172. The system control processor 112 is responsible for maintaining the structure storage list 104 in system memory 113 in response to operator editing requests. The system control processor is connected to an I/O processor 124 that processes data from various operator control devices such as a keyboard 126, stylus and tablet 128, or program function keys 130. The operator uses these devices to communicate with the graphics display system and to perform editing and update tasks on the graphics objects.

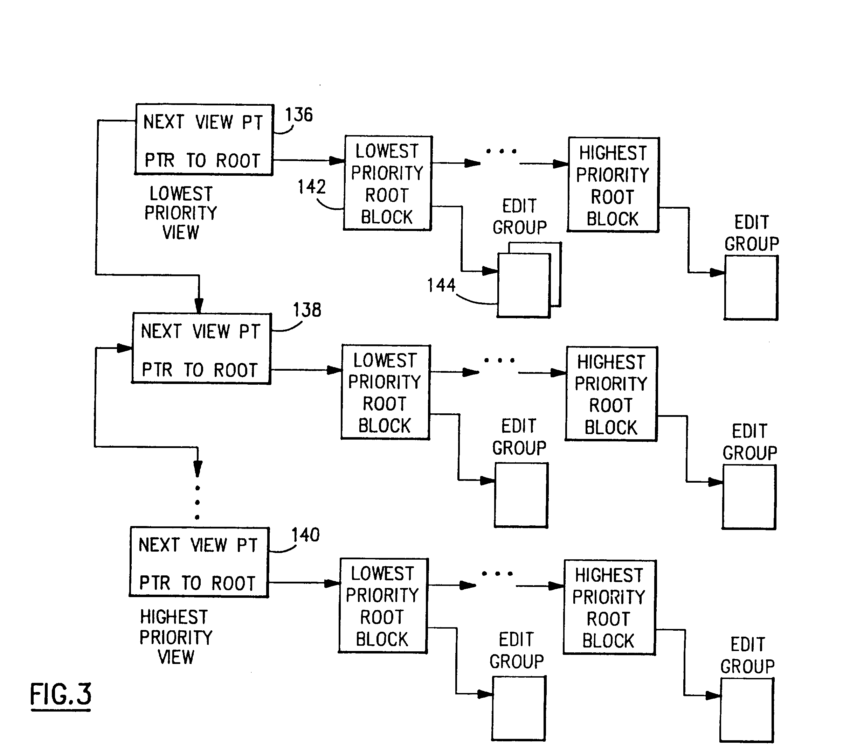

A hierarchical graphics description language, such as PHIGS, contains a series of hierarchically related structure elements. The image on a display device is comprised of a series of views or windows each containing a particular image or set of images. The relationship among the structure elements will be described with reference to Fig. 3. Each view of a display has a view pointer, for example, elements 136, 138, and 140 in Fig. 3. Each view contains a pointer to the next higher priority view. The view also contains a pointer to the first root block for that view. A root block is the anchor point for a series of edit groups that together make up an object or portion of an object in the display. For example, view pointer 136 points to root block 142 that in turn points to edit group 144. Each root block also has a pointer to the next highest priority root block with its associated edit groups.

The process of image generation involves a traversal of the structures pointed to by the view, root, and edit group. These structures are processed from lowest priority to the highest priority so that the final image is that of the highest priority objects.

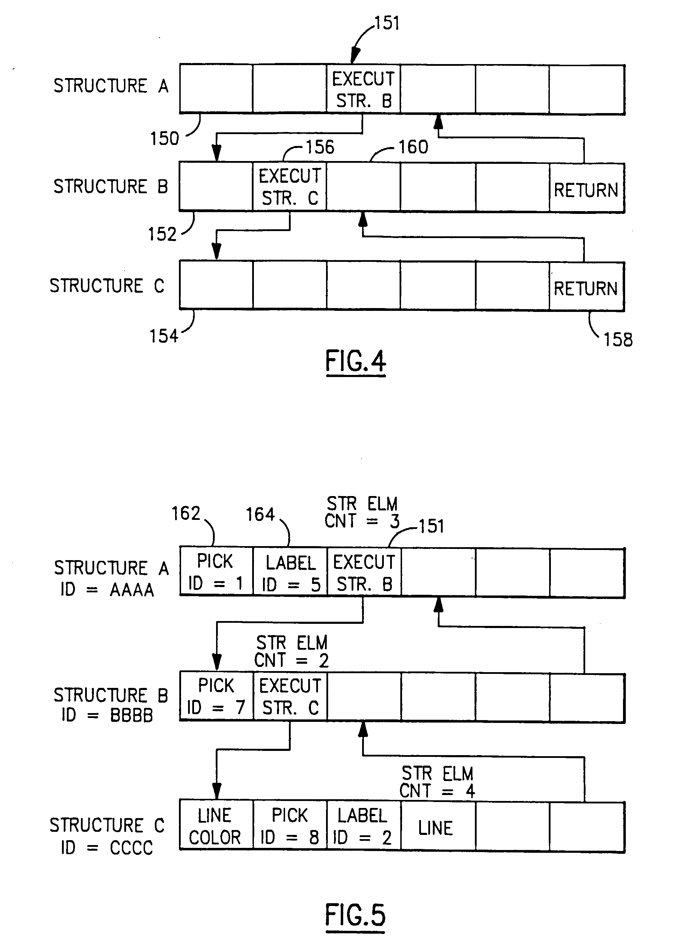

At the lowest level, a series of "structures" that are executed to form the required object on the display device. Each structure is comprised of one or more identifiers, basic drawing primitives, and calls to other structures. The ability of a structure to execute another structure allows the establishment of a hierarchical relationship among the structures. For example, Fig. 4 illustrates the relationship between a set of structures. Structure A 150 performs a series of basic operations (in the blank boxes) and then executes structure B 152. The "execute structure B" command 151 is contained as an element of structure A. Structure B in turn executes structure C 154 by means of "execute structure C" command 156. When structure C has completed processing the "return" command 158 returns control to structure B 152 to the point following execute structure command 156, i.e., 160. The completion of structure B control returns control to structure A for the completion of processing.

Fig. 5 illustrates the identifying elements associated with each structure. Each structure has a unique arbitrary structure identifier to identify that structure. In addition, the structure may contain a non-unique pick I.D. 162, a non-unique label I.D. 164. The pick I.D. is established and used by the application program to identify an operator selected object during pick detection processing. The label I.D. 164 contains the label associated with the structure by an application program. The label I.D. allows the application program to identify those structure elements in a group defined by the application. Since the unique structure identifier is system assigned and is not always conveniently manipulated by the application program, the label I.D. field provides increased flexibility to the application. Each structure element in the structure is identified by a structure element number. For example, in Fig. 5 the command "execute structure B" 151 is structure element number 3 in structure AAAA. The structure element counter can be used to locate a particular structure element within the larger structure.

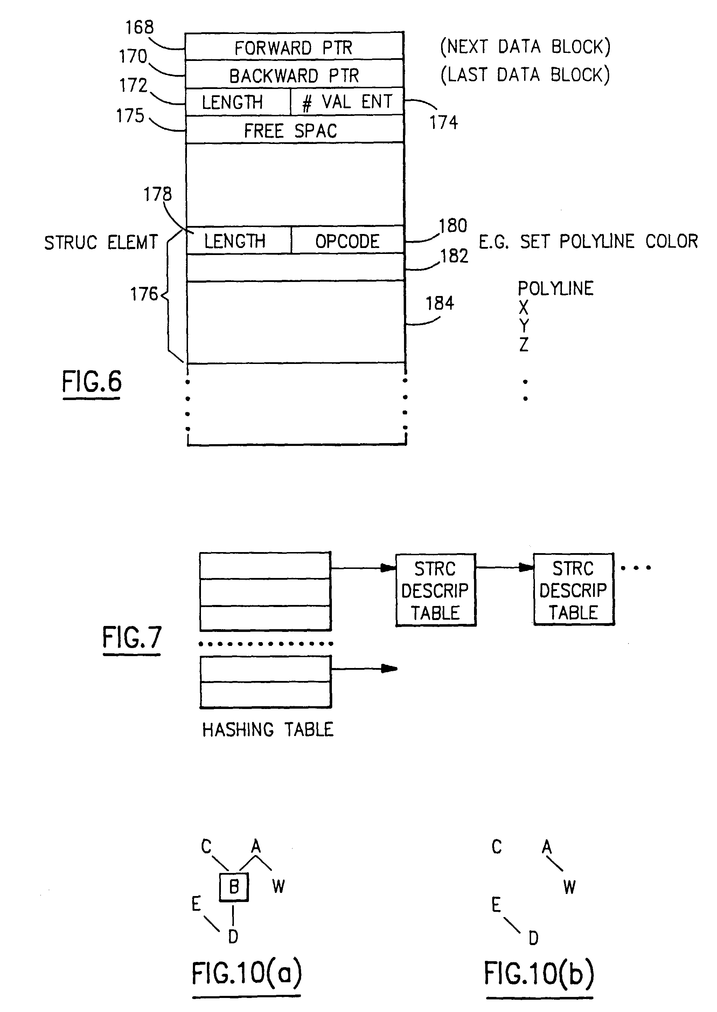

The preferred embodiment of the present invention is implemented using one or more edit blocks to represent each structure. A structure descriptor table contains basic structure identification information and a pointer to the first edit block of the structure. Each edit block is structured as shown in Fig. 6. Forward pointer 168 points to the next edit block, if any, in the structure. Similarly, the backward pointer 170 points to the prior edit block or to the structure descriptor if this is the first edit block. The length 172 of the edit block is stored next with the number of valid entries 174. Field 175 contains the amount of free space remaining in the edit block.

Each structure element 176 is stored in a contiguous section of the edit block. The structure element contains length information 178 and operation code, opcode 180, and individual pieces of data 182, 184. For example, a command to draw a polyline would begin with a given length, an opcode indicating that a polyline is to be drawn, and then would be followed by coordinate values defining the polyline. These each would be passed as X, Y and Z values for each vertex of the polyline. The structure element format is repeated for each structure element within the particular structure. If the sum of the lengths of all structure elements exceeds the size of the edit block, in the preferred embodiment 64,000 bytes, a second edit block is created to contain the additional structure elements. This second and any subsequent edit blocks are chained to the proceeding edit blocks and to the structure descriptor with forward and backward pointers.

The graphics system implements a set of control tables to allow rapid access to the data contained in the structures and associated edit blocks. In the preferred embodiment of the invention, certain tables are required only by the system control processor, while others require access by both the system control processor and the graphics control processor. The memory, however, need not be split in this way.

The control tables in local system control program memory include:
- Structure descriptors
- Structure I.D. hashing table
- Pick I.D. element blocks
- Pick I.D. hashing table
- Label I.D. element blocks
- Label I.D. hashing table
- Reference structure list.

The tables in global memory shared by the system control processor and graphics control processor include:
- Execute structure list
- Edit block list
- Edit block address table.

These control tables provide the rapid access to structure elements necessary to accomplish the editing and database maintenance of the graphics image. A description of these control tables follows.

As discussed above, each structure in the model has a structure descriptor which contains specific information for that structure. The structure descriptor is created by the structure management when an open structure procedure is processed or an execute structure element is encountered. The structure descriptor contains:
- Next structure descriptor
- Previous structure descriptor pointer
- Structure I.D.
- Pointer to edit block address list
- Pointer to pick block table
- Pointer to label block list
- Pointer to execute structure block list (EXSL)
- Pointer to reference structure block list (REFL)
- Total number of structure elements
- Associated view bit map (indicating the views to which the structure has been associated.)

A structure hashing table is provided containing pointers to each of the structure descriptors in the workstation structure network. This table is hashed based on the structure I.D. and allows the application or system to access rapidly a structure based on the structure I.D. The structure I.D. hashing table contains pointers to the beginning of a structure descriptor chain of all structures hashed to the same entry with each structure descriptor pointing to the following structure descriptor. (See Fig. 7.)

An Execute Structure Element Block exists for each execute structure element. The storage manager creates the block when an execute structure command is first processed. All execute structure element blocks for a specified structure are doubly linked to form the execute structure list (EXSL) for that structure. In addition, the block is linked into the reference structure list (REFL) for the execute structure. The execute structure block contains:
- Next execute block address
- Previous execute block address
- Address of edit block containing the execute structure element
- Address of the execute structure element entry
- Address of the structure descriptor of the calling structure
- Address of the structure descriptor of the execute structure
- Next execute block in REFL chain
- Previous execute block in REFL chain.

The reference structure list contains the information about all structures that reference a specified structure and shares the same execute element block of the calling structure. For example, if structure A executes structure B, the storage manager will create an execute structure element block for B and chain it to the EXSL (execute structure list) of A. This block will also be chained to the REFL (reference structure list) of structure B.

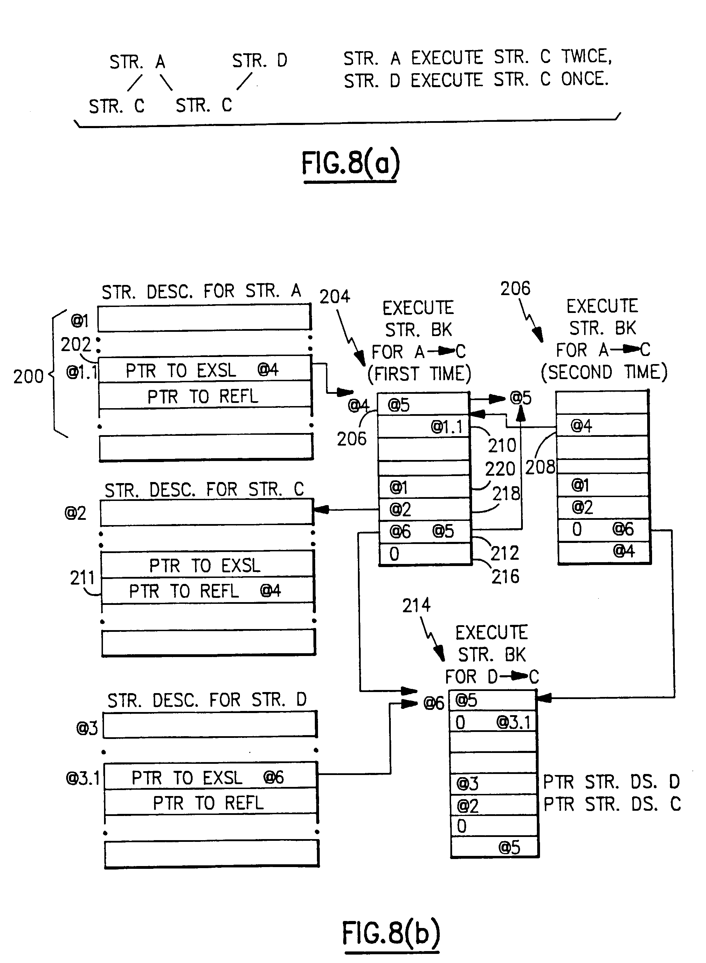

Fig. 8a shows the hierarchical relationship between structure A, structure D and two instances of structure C. Fig. 8b shows, in detail, the relationship between the structure descriptors and execute structure blocks for this example. Structure descriptor for structure A is shown at 200 beginning at address @1. The structure descriptor contains a pointer 202 to the execute structure element block (EXSL) 204 at address @4. The execute structure block 204 for the first execution of structure C by structure A is shown at 204. Because structure C is executed by structure A a second time "next execute block pointer" 206 points to the address of the second execute structure block for structure C, @5. Backward pointer 208 from execute structure block 206 points to execute structure block 204. A backward pointer 210 points to the address of the EXSL pointer 202 of calling structure descriptor A.

The reference structure list pointers are contained in the execute structure blocks. The REFL pointer from structure C, 211, points to the first EXSL to reference Structure C, i.e. EXSL 204. The forward REFL pointer 212 in execute structure block 204 points to next execute structure block 206 representing the second execution of structure C by structure A. The REFL pointer of EXSL 206 points to FXSL 214, the execution of structure C by structure D. The null backwards REFL pointer 216 indicates that there is no previous execute block in the REFL chain. Address pointer 218 indicates the address of the structure descriptor of the execute structure, in this case the structure descriptor for structure C at address @2. Address locator 220 contains the address of the calling structure descriptor.

Each pick I.D. has a pick I.D. element block pointed to by the pick element pointer in the edit block. Content of the pick I.D. element block is:
- next pick block in hashing chain
- previous pick block in hashing chain
- next pick block in structure pick chain
- previous pick block in structure pick chain
- structure I.D.
- pick I.D.
- corresponding edit block address
- corresponding edit block entry address.

The pick I.D. element blocks are connected into a pick I.D. hashing table. Like the structure descriptor table, the pick I.D. hashing table has, in the preferred embodiment, a fixed sized table. Each entry contains either a pointer to a pick I.D. hashing chain, or zero, which indicates that no hashing chain exists in this hash entry. The pick I.D. is hashed according to the combined structure I.D. and pick I.D. for that structure element.

A similar label I.D. element block and label I.D. hashing table are created which correspond to the pick I.D. element block and pick I.D. hashing table.

The pick I.D. element blocks for each structure are chained together to form a "pick element block list". Similarly, the label I.D. element blocks are chained to form a "label element block list".

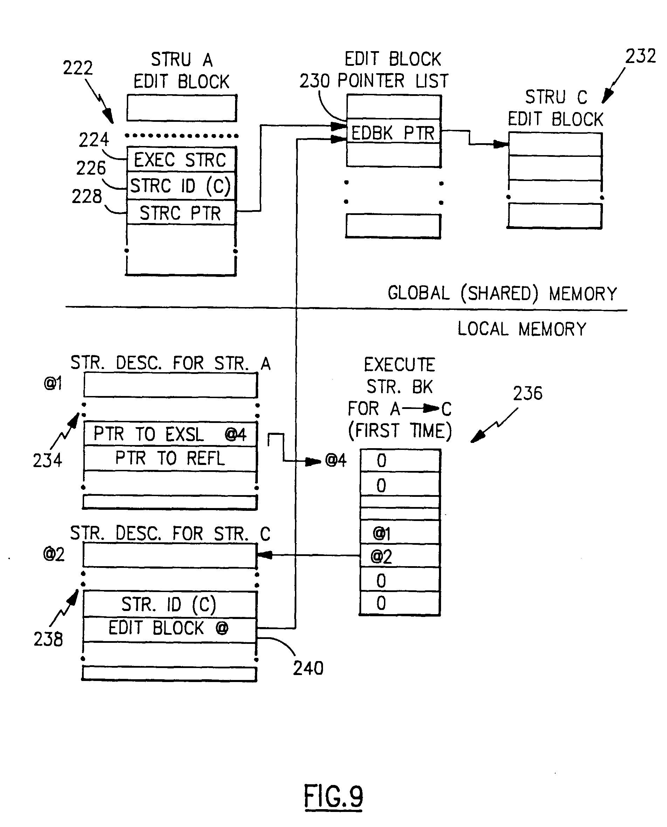

An "edit block list" is made up of one or more variable sized edit blocks. Each edit block contains portions of the attributes or primitive structure elements for a graphic display as described above. Each edit block contains a header to identify the block and a series of structure element orders. The edit block address list is used as an address map to communicate between the storage manager and the graphics control processor. The list is made up of one or more "edit block address blocks". Each address block has forward and backward pointers plus entries pointing to the first edit block of a particular structure. This edit block address list allows structure descriptors containing most of the information required by the storage management process to reside in the local memory thereby speeding up performance. Fig. 9 illustrates this structure. Structure A edit block 222 contains the structures elements for structure A. Among these elements are execute structure command 224 which will execute the structure C 226. The following structure I.D. is an address pointer 228 that points to the edit block pointer list address for structure C 230. This pointer, in turn, points to the first edit block of structure C 232. The structure descriptor table for structure A is located in local memory at 234, @1. The structure descriptor points to the EXSL address for the execution by A of structure C. The execute structure block 236 points to the structure descriptor for the executed structure C that is contained at 238, @2. The structure descriptor for structure C contains a pointer 240 to the edit block pointer list in shared memory which, in turn, points to the structure C edit blocks. In addition, this allows the first edit block in each structure to be freely created, replaced, or deleted during structure editing without concern that the edit block may be referenced by other structures.

In the preferred embodiment, the system uses a memory management scheme to allocate memory for blocks any size, in powers of 2, up to 64K bytes. Furthermore, it provides pools of fixed block size for the structure descriptor table for fast allocation.

The structure storage organisation discussed above allows structure editing functions to be efficiently accomplished. The following structure storage editing commands are provided.
- Editing control functions
   - Open structure
   - Closed structure
   - Set element pointer
   - Offset element pointer
   - Set element pointer at label
   - Set element pointer at pick I.D.
   - Locate element at type
- Structure content modification
   - insert edit group
   - replace edit group
   - copy structure
   - delete element
   - delete element range
   - delete element between label
   - empty structure
   - delete element group
- Structure manipulation
   - delete structure
   - delete all structures
   - delete structure network
   - delete structure network conditionally.

The above described tables allow rapid access to the hierarchical graphics data structure for editing and update. For example, to add a structure element to an edit block, for example, to add a line to an object, the following operations would be performed.
1. Open structure (I.D. = XXXX)
   The structure descriptor hash table is searched to locate structure XXXX. If the structure is not found then a new structure descriptor is created.
2. Set element pointer at label
   The label I.D. hash table is searched to find the label I.D. element block and to find the label I.D. structure element within the corresponding edit block.
3. Insert edit block (up to 64K bytes of data in the preferred embodiment)
   If the current edit block has enough free space, inserted edited block is added to the current block. Otherwise, depending on the size of the inserted edit block in the current edit block, a new edit block is created by combining the two, if the total size is less than 64K bytes, or an entire new block is created and chained to the old ones, or two new edit blocks are created splitting the current edit block and inserting the new one. Pick I.D., label I.D. and execute structure elements are handled specially. Pick I.D. and label I.D. are chained in the inserted edit block and added to the pick I.D. element block or label I.D. element block. An execute structure is added by searching through the hash table to find the executed structure, if not found, creating the associated structure descriptor table, execute structure table, and adding the pointer to the edit block address list to the data word in the edit block.
4. Close structure
   A more complex example involves the deletion of an entire structure. Fig. 10a shows the relationship between six structures. If structure B is to be deleted, the interrelationships between structure B and the other structures must be examined and corrected in light of the deletion. As shown in Fig. 10a, structure B is executed by structures C and A and it, in turn, executes structure D. Deletion of structure B includes the following step.

1. Using the REFL list for structure B, trace back to find the corresponding structures at a referencing structure B and zero the corresponding edit block entry. Delete corresponding execute structure blocks and rechain the remaining execute structure blocks in the ESXL chain.
2. Search the execute structure list (EXSL) of structure B to rechain the reference list of the executed structures.
3. Search the pick I.D. list and remove all pick I.D. blocks from the hashing chain if there is a pick I.D. in structure B.
4. Search the label I.D. list and remove all label blocks from the hashing chain that reference labels in structure B.
5. Search down the edit block and remove all edit blocks associated with structure B.
6. Remove the structure descriptor of structure B from the structure descriptor list and free the associated storage.

This simple delete structure command causes the deletion of a single structure. More complex commands such as "delete structure network" and "delete structure network conditional" can also be executed by employing a combination of these operations.

These commands make use of the above described structures and control tables to quickly access, edit, and return the relevant elements. These commands evaluate the content of the control tables when performing certain operations. For example, when the command "delete structure network conditionally" analyses each execute structure in a referenced structure list to determine whether the structure is referenced by another structure. If so, it is not deleted. Similarly, other commands to delete or replace items consider other references to that item by other descriptors.

In this way the system provides a means for rapidly and efficiently editing structure storage data.

There has been described a graphics data management system that includes control tables for quickly accessing information about the display structures to be drawn. A series of control tables and hashed indexes to graphics descriptors allow structure storage editing commands to quickly and effectively edit structure details. A hierarchical graphics data language results in a hierarchical network of structure elements and associated graphic primitive commands. The editor provides a method to preserve the hierarchy while efficiently accomplishing editing tasks. Hashing tables to the structure I.D., pick I.D., label I.D. and a chained list of execute structures are maintained to rapidly access and control those elements. Structure storage is maintained in local memory with certain portions shared with the graphics control processor.

## Claims

1. A computer graphics system having logic for generating images for display from hierarchical graphics data structures representing graphics primitives, each of said graphics data structures (150,152) optionally referencing another data structure (152,154) so as to invoke the execution of said data structure, wherein the logic is operable to store at a first memory (104) location having a first address, for each of said data structures, a structure descriptor (200) comprising data describing said data structure, characterised in that the logic is operable:
for each instance of the invocation of one of said data structures by another of said data structures, to create an execute structure block (204) having address pointers to the structure descriptor for the invoking data structure and to the structure descriptor for the invoked data structure, such that each execute structure block is associated with an invoking structure and an invoked structure;
for each invoking structure, to link by address pointers the execute structure blocks associated with said invoking structure to form an execute structure list; and
for each invoked structure, to link by address pointers the execute structure blocks associated with said invoked structure to form a reference structure list.

2. A computer graphics system according to claim 1, wherein each of said graphics data structures has a corresponding structure identifier and wherein a structure hash table is defined in memory, the logic being operable to transform said structure identifier to a hash value and to insert said hash value into said structure hash table together with a pointer to said first address.

3. A computer graphics system according to claim 2, wherein the logic is further operable:
to store a label identifier with each structure and storing a linked hash value for said label identifier in a label hash table; and
to store a pick identifier with each structure and storing a linked hash value for said pick identifier in a pick hash table.

4. A computer graphics system according to any one of claims 1 to 3, wherein said structure elements are stored in a first shared memory; and
said structure descriptors and hash tables are stored in a second non-shared memory.

5. A method of storing graphics data structures in an hierarchical linked relationship in a memory (104) of a computer graphics system to facilitate access thereto, in which computer graphics system graphics data structures representing graphics primitives are used for generating images for display, each of said data structures (150,152) optionally referencing another data structure (152,154) so as to invoke the execution of said data structure, wherein the method includes the step of, for each of said data structures, storing at a first memory location having a first address a structure descriptor (200) comprising data describing said data structure, characterised in that the method includes the steps of:
for each instance of the invocation of one of said data structures by another of said data structures, creating an execute structure block (204) having address pointers to the structure descriptor for the invoking data structure and to the structure descriptor for the invoked data structure, such that each execute structure block is associated with an invoking structure and an invoked structure;
for each invoking structure, linking by address pointers the execute structure blocks associated with said invoking structure to form an execute structure list; and
for each invoked structure, linking by address pointers the execute structure blocks associated with said invoked structure to form a reference structure list.

6. A method according to claim 5, in which said lists are doubly linked lists.

7. A method according to claim 5 or claim 6, wherein each of said data structures has a corresponding structure identifier, the method including the steps of: for each of said data structures, transforming said structure identifier to a hash value and inserting said hash value into a structure hash table together with a pointer to said first address.

8. A method according to any one of claims 5 to 7, including the step of defining, for each of said data structures, a first edit block and optionally one or more subsequent edit blocks linked to form an edit block list, each structure descriptor containing a pointer to the first edit block defined for the data structure corresponding to the structure descriptor.

9. A method according to claim 8, including the step of defining an edit block pointer list containing pointers to the first edit block defined for each of said data structures, said pointers to said first edit blocks contained in said structure descriptors being indirect pointers via said pointer list.

## Patentansprüche

1. Ein Computergraphiksystem mit Logik zur Erzeugung von Bildern zur Anzeige von hierarchischen, graphischen Datenstrukturen, welche graphische Grundformen darstellen, wobei jede dieser graphischen Datenstrukturen (150, 152) optional auf eine andere Datenstruktur (152, 154) verweist, um die Ausführung der Datenstruktur aufzurufen, wobei die Logik funktionsfähig ist, um in einer ersten Speicherstelle (104) mit einer ersten Adresse für jede dieser Datenstrukturen einen Strukturdeskriptor (200) zu speichern, der Daten enthält, die diese Datenstruktur beschreiben, das dadurch gekennzeichnet wird, daß die Logik funktionsfähig ist,
um für den Fall, daß eine der Datenstrukturen von einer anderen Datenstruktur aufgerufen wird, einen Ausführungs-strukturblock (204) zu erstellen, der Adreßzeiger im Strukturdeskriptor für die aufrufende Datenstruktur und im Strukturdeskriptor für die aufgerufene Datenstruktur hat, so daß jeder Strukturblock zu einer aufrufenden und einer aufgerufenen Struktur gehört;
um für jede aufrufende Struktur, die Ausführungsstrukturblöcke, die zu der aufgerufenen Struktur gehören, mittels Adreßzeigern zu verknüpfen, um eine Ausführungsstrukturliste zu bilden; und
um für jede aufgerufene Struktur die Ausführungsstrukturblöcke, die zu der aufgerufenen Struktur gehören, mittels Adreßzeigern zu verknüpfen, um eine Referenzstrukturliste zu bilden.

2. Ein Computergraphiksystem gemäß Anspruch 1, wobei jede der graphischen Datenstrukturen ein entsprechendes Strukturidentifizierungszeichen hat und eine Struktur-Hash-Tabelle im Speicher definiert ist, wobei die Logik funktionsfähig ist, um das Strukturidentifizierungszeichen in einen Hash-Wert umzuwandeln und den Hash-Wert in eine Struktur-Hash-Tabelle zusammen mit einem Zeiger in der ersten Adresse einzufügen.

3. Ein Computergraphiksystem gemäß Anspruch 2, wobei die Logik außerdem funktionsfähig ist,
um einen Kennsatznamen in jeder Struktur zu speichern und einen verknüpften Hash-Wert für den Kennsatznamen in einer Kennsatz-Hash-Tabelle zu speichern; und
um ein Auswahlidentifizierungszeichen in jeder Struktur zu speichern und einen verknüpften Hash-Wert für das Auswahlidentifizierungszeichen in einer Auswahl-Hash-Tabelle zu speichern.

4. Ein Computergraphiksystem gemäß irgendeinem der Ansprüche 1 bis 3, wobei die Strukturelemente in einem ersten gemeinsam benutzten Speicher gespeichert werden; und
die Strukturdeskriptoren und Hash-Tabellen in einem zweiten, nicht gemeinsam benutzten Speicher gespeichert werden.

5. Ein Verfahren, um graphische Datenstrukturen in einem hierarchisch verknüpften Verhältnis in einem Speicher (104) eines Computergraphiksystems zu speichern, um den Zugriff darauf zu erleichtern, wobei in dem Computergraphiksystem graphische Datenstrukturen, welche graphische Grundformen darstellen, zur Erzeugung von Bildern zur Anzeige benutzt werden, und jede der Datenstrukturen (150, 152) optional auf eine andere Datenstruktur (152, 154) verweist, um so die Ausführung der Datenstruktur aufzurufen, wobei das Verfahren den Schritt enthält, um für jede der Datenstrukturen in einer ersten Speicherstelle mit einer ersten Adresse einen Strukturdeskriptor (200) zu speichern, der Daten enthält, welche die Datenstruktur beschreiben, wobei das Verfahren dadurch gekennzeichnet wird, daß es Schritte enthält, um
für den Fall, daß eine der Datenstrukturen von einer anderen Datenstruktur aufgerufen wird, einen Ausführungsstrukturblock (204) zu erstellen, der Adreßzeiger im Strukturdeskriptor für die aufrufende Datenstruktur und im Strukturdeskriptor für die aufgerufene Datenstruktur hat, so daß jeder Strukturblock zu einer aufrufenden und einer aufgerufenen Struktur gehört;
um für jede aufrufende Struktur, die Ausführungsstrukturblöcke, die zu der aufgerufenen Struktur gehören, mittels Adreßzeigern zu verknüpfen, um eine Ausführungsstrukturliste zu bilden; und
um für jede aufgerufene Struktur die Ausführungsstrukturblöcke, die zu der aufgerufenen Struktur gehören, mittels Adreßzeigern zu verknüpfen, um eine Referenzstrukturliste zu bilden.

6. Ein Verfahren gemäß Anspruch 5, in dem die Listen doppelt verknüpfte Listen sind.

7. Ein Verfahren gemäß Anspruch 5 oder Anspruch 6, wobei jede dieser Datenstrukturen ein entsprechendes Strukturidentifizierungszeichen hat, wobei das Verfahren Schritte enthält, um für jede der Datenstrukturen das Strukturidentifizierungszeichen in einen Hash-Wert umzuwandeln und den Hash-Wert in eine Struktur-Hash-Tabelle zusammen mit einem Zeiger in der ersten Adresse einzufügen.

8. Ein Verfahren gemäß irgendeinem der Ansprüche 5 bis 7, das den Schritt enthält, um für jede der Datenstrukturen einen ersten Editierblock zu definieren und optional einen Editierblock oder mehrere Editierblöcke, die verknüpft wurden, um eine Editierblockliste zu bilden, wobei jeder Strukturdeskriptor einen Zeiger im ersten Editierblock enthält, der für die Datenstruktur entsprechend dem Strukturdeskriptor definiert wurde.

9. Ein Verfahren gemäß Anspruch 8, das den Schritt enthält, um eine Editierblock-Zeigerliste zu definieren, die Zeiger im ersten Editierblock enthält, die für jede der Datenstrukturen definiert wurden, wobei die Zeiger in den ersten Editierblöcken, die in den Strukturdeskriptoren enthalten sind, indirekte Zeiger via dieser Zeigerliste sind.

## Revendications

1. Un système graphique pour ordinateur, comportant une logique destiné à générer des images pour affichage par des structures de données graphiques et hiérarchiques représentant des primitives graphiques, chacun desdites structures de données graphiques (150, 152) faisant, en option, référence à une autre structure de données (152, 154), de manière à appeler l'exécution de ladite structure de données, dans laquelle la logique peut fonctionner pour stocker en un premier emplacement mémoire (104) ayant une première adresse, pour chacune desdites structures de données, un descripteur de structure (200) comprenant une description des données de ladite structure de données, caractérisé en ce que la logique est susceptible de fonctionner :
dans chaque cas d'appel d'une desdites structures de données, par une autre desdites structures de données afin de créer un bloc de structure d'exécution (204) ayant des pointeurs d'adresse allant au descripteur de structure dans le but d'appeler la structure de données et allant au descripteur de structure concernant la structure de données appelée, de manière que chaque bloc de structure d'exécution soit associé à une structure appelante et à une structure appelée;
pour chaque structure appelante, afin d'effectuer une liaison par les pointeurs d'adresse des blocs de structure d'exécution associés à ladite structure appelante pour former une liste de structure d'exécution;
pour chaque structure appelée, pour effectuer une liaison par les pointeurs d'adresse des blocs de structure d'exécution associés à ladite structure appelée pour former une liste de structure de référence.

2. Un système graphique pour ordinateur selon la revendication 1, dans lequel chacune desdites structures de données graphiques a un identificateur de structure correspondant et dans lequel une table d'accès de structure est définie en mémoire, la logique pouvant fonctionner pour transformer ledit identificateur de structure en une valeur décomposée et pour insérer ladite valeur décomposée dans ladite table d'accès de structure, conjointement avec un pointeur, à ladite première adresse.

3. Un système graphique pour ordinateur selon la revendication 2, dans lequel la logique peut en outre fonctionner :
pour stocker un identificateur d'étiquette avec chaque structure et stocker une valeur décomposée liée pour ledit identificateur d'étiquette dans une table d'accès d'étiquette;
pour stocker un identificateur de choix avec chaque structure et stocker une valeur décomposée liée pour ledit identificateur de choix, dans une table d'accès de choix;

4. Un système graphique pour ordinateur selon l'une quelconque des revendications 1 à 3, dans lequel lesdits éléments de structure sont stockés dans une première mémoire partagée; et
lesdits descripteurs de structure et tables d'accès sont stockés dans une deuxième mémoire, non partagée.

5. Un procédé de stockage de structures de données graphiques dans une relation à liaison hiérarchique, dans une mémoire (104), d'un système graphique pour ordinateur destiné à faciliter son accès, système graphique d'ordinateur dans lequel des structures de données graphiques représentant des primitives graphiques sont utilisées pour générer des images destinées à l'affichage, chacune desdites structures de données (150, 152) prenant référence en option sur une autre structure de données (152, 154), de manière à appeler l'exécution de ladite structure de données, dans lequel le procédé comprend l'étape consistant à, pour chacune desdites structures de données, stocker, dans un premier emplacement mémoire ayant une première adresse, un descripteur de structure (200) comprenant la description des données de ladite structure de données, caractérisé en ce que le procédé comprend les étapes qui consistant à :
pour chaque cas d'appel d'une desdites structures de données par une autre desdites structures de données, créer un bloc de structure d'exécution (204) ayant des pointeurs d'adresse destinés au descripteur de structure pour la structure de données appelante et destinés au descripteur de structure destiné à la structure de données appelée, de manière que chaque bloc de structure d'exécution soit associé à une structure appelante et à une structure appelée;
pour chaque structure appelante, relier par des pointeurs d'adresse, les blocs de structure d'exécution associés à ladite structure appelante, afin de former une liste de structure d'exécution; et
pour chaque structure appelée, relier par des pointeurs d'adresse les blocs de structure d'exécution associés à ladite structure appelée pour former une liste de structure de référence.
6. Un procédé selon la revendication 5, dans lequel lesdites listes sont des listes à double liaison.
7. Un procédé selon la revendication 5 ou la revendication 6, dans lequel chacune desdites structures de données a un identificateur de structure correspondant, le procédé comprenant les étapes qui consistent en à : pour chacune desdites structures de données, transformer ledit identificateur de structure en une valeur décomposée et insérer ladite valeur décomposée dans une table d'accès de structure conjointement avec un pointeur, à ladite première adresse.
8. Un procédé selon l'une quelconque des revendications 5 à 7, comprenant l'étape consistant à définir pour chacune desdites structures de données un premier bloc d'édition et, en option, un ou plusieurs blocs d'édition subséquent reliés pour former une liste de blocs d'édition, chaque descripteur de structure contenant un pointeur allant au premier bloc d'édition défini pour la structure de données correspondant au descripteur de structure.
9. Un procédé selon la revendication 8, comprenant les étapes consistant à définir une liste de pointeurs de blocs d'édition contenant des pointeurs destinés au premier bloc d'édition, défini pour chacune desdites structures de données, lesdits pointeurs allant auxdits premiers blocs d'édition qui sont contenus dans lesdits descripteurs de structure étant des pointeurs indirects opérant via la liste de pointeurs.
